Europäisches Patentamt

European Patent Office

Office européen des brevets

(19)

(11) Veröffentlichungsnummer: **0 003 123**
**B1**

(12) **EUROPÄISCHE PATENTSCHRIFT**

(45) Veröffentlichungstag der Patentschrift: **03.02.82**

(51) Int. Cl.³: **C 04 B 7/44**

(21) Anmeldenummer: **79100049.0**

(22) Anmeldetag: **09.01.79**

(54) **Verfahren und Vorrichtung zum Vorbrennen von karbonatischen Rohstoffen.**

(30) Priorität: **12.01.78 DE 2801161**

(43) Veröffentlichungstag der Anmeldung:
**25.07.79 Patentblatt 79/15**

(45) Bekanntmachung des Hinweises auf die Patenterteilung:
**03.02.82 Patentblatt 82/5**

(84) Benannte Vertragsstaaten:
**DE FR GB IT**

(56) Entgegenhaltungen:
**DE - A - 2 324 565**
**DE - A - 2 510 312**
**DE - A - 2 558 506**
**FR - A - 1 540 679**
**US - A - 3 904 353**
**US - A - 3 925 091**
**US - A - 3 964 922**

(73) Patentinhaber: **BKMI Industrieanlagen GmbH**
**Sapporobogen 6 - 8**
**D-8000 München 40 (DE)**

(72) Erfinder: **Quittkat, Wolfram Gotthold, Dr.-Ing.**
**Pippinstrasse 32**
**D-8035 Gauting (DE)**

Courier Press, Leamington Spa, England.

## Verfahren und Vorrichtung zum Vorbrennen von karbonatischen Rohstoffen

Die Erfindung bezieht sich auf das Vorbrennen von karbonatischen Rohstoffen, wie z. B. Zementrohmehl, in einem Schwebegasvorwärmer, bei dem Brennstoff in Rauchgase aus einem nachgeschalteten Drehrohrofen eingeführt wird und anschließend aus dem Kühler abgezogene Kühlluft als Verbrennungsluft tangential eingeführt wird.

In dem einem Drehrohrofen vorgeschalteten Schwebegasvorwärmer wird durch zusätzliche Beheizung die Entsäuerung der karbonatischen Rohstoffe nahezu vollständig durchgeführt und dadurch, bezogen auf das Ofenvolumen, eine hohe Durchsatzleistung erzielt.

Das eingangs umrissene Verfahren ist bekannt nach der US-A 3 904 353. Hiernach kommt das Brennstoff-Rauchgas-Luft-Gemisch schon zur Verbrennung, ehe sich weiter oberhalb das Rohmehl darin verteilt. Dadurch kann es unterhalb der Rohmehlzuführung zu Überhitzungen, Schmelzerscheinungen und Anbackungen kommen, die letztlich Verstopfungen verursachen könen.

Hiervon ausgehend, liegt der Erfindung die Aufgabe zugrunde, eine gründliche Durchmischung der Rohmehl-Rauchgas-Suspension mit dem Brennstoff vor dem Beginn der Verbrennung zu erreichen, d.h. eine gleichmäßige Verteilung der Brennstoffteilchen in der Rohmehl-Rauchgas-Suspension vor der Verbrennung, um hierdurch die eingangs gennanten Nachteile zu vermeiden.

Diese Aufgabe wird dadurch gelöst, daß das Rohmehl in den Bereich der Brennstoffzuführung hineingeführt wird und den von unten zugeführten Rauchgasen vor der Brennstoffzuführung durch Aufprägen eines Dralls ein veränderbarer Strömungswiderstand entgegengesetzt wird.

Aufgrund der Maßnahme gemäß der Erfindung kommt die beabsichtigte gründliche Durchmischung der Rohmehl-Rauchgas-Suspension mit dem Brennstoff auf folgende Weise zustande:

1. Durch die Drallströmung wird das Rohmehl nach unten gesaugt und unterhalb der Brennstoffaufgabe gleichmäßig im Rauchgas verteilt.
2. Dann wird der Brennstoff in diese Suspension hineingegeben und durch die Turbulenz ebenfalls gleichmäßig verteilt. Damit sind optimale Voraussetzungen für eine gleichmäßige Wärmeübertragung beim Eintreten der Verbrennung gegeben.
3. Der zur Ansaugung der Verbrennungsluft aus dem Kühler erforderliche Unterdruck im Schwebegasvorwärmer wird durch eine Drosselung im Steigrohr reguliert, wobei die Drosselwirkung durch Drallerzeugung erzielt wird. Somit werden Drosselung und Drallerzeugung nutzbringend miteinander kombiniert.

Durch Verändern des Unterdrucks im Schwebegasvorwärmer mittels der Drosselung ist es möglich, die angesaugte Verbrennungsluft so zu dosieren, daß die Luftmenge auf die dem Schwebegasvorwärmer ebenfalls zugeführte Brennstoffmenge abgestimmt werden kann, d.h. bei erhöhtem Drosselwiderstand steigt der Unterdruck im Schwebegasvorwärmer an, wodurch mehr Luft angesaugt wird und umgekehrt. Gleichzeitig wird die Einführung des Rohmehls in den Bereich der Brennstoffzuführung dadurch unterstützt, daß sich im Schwebegasvorwärmer aufgrund des Dralls eine Wirbelsenke bildet, in welcher das Rohmehl nach unten gesaugt wird. Damit wird mit der erfindungsgemäßen Maßnahme die beabsichtigte gründliche Durchmischung des Rohmehls mit dem Brennstoff erzielt, wobei die Vermischungsenergie aus der sonst verlustbehafteten Drosselung bezogen wird.

Auf diese Weise ist außerdem gewärleistet, daß die Oxidation des Brennstoffs nicht mit sichtbarer Flamme und entsprechender Flammenstrahlung stattfindet, wodurch örtliche Überhitzungen und Sinterung eintreten könnten, sondern als unsichtbare Oxidation der Brennstoffteilchen, die sich zum Teil bereits an Rohmehl-Teilchen angelagert haben, wodurch die freiwerdende Wärme unmittelbar und fast isotherm — d.h. ohne kritische Temperaturerhöhung — die endotherme Entsäuerung der $CaCo_3$-Partikel bewirkt.

In vorteilhafter Ausbildung der Erfindung dient zur Durchführung des erfindungsgemäßen Verfahrens ein sich nach oben hin konisch erweiternder Schacht mit einem axialen Einlaß im unteren Bereich für die Rauchgase, wobei der Einlaß mit drehbaren Leitschaufeln versehen ist. Die Wirkungsweise der Leitschaufeln ist in einem nachfolgenden Ausführungsbeispiel dargestellt. Das Verstellen der Leitschaufeln wird vorzugsweise dadurch geregelt, daß am Austrittsstutzen ein Sauerstoffmeßgerät vorgesehen ist, das den Sauerstoffgehalt der Rauchgase nach dem Durchströmen des Schwebegasvorwärmers mißt und über ein Steuergerät und über einen Verstellantrieb für die Leitschaufeln diese verstellt. Mehrere dieser Leitschaufeln bilden somit eine Segmentdrosselklappe.

Beispiele für die Verfahrensdurchführung und für die Vorrichtung sind in der Zeichnung anhand mehrerer Figuren dargestellt. Es zeigen

Fig. 1 eine schematische Ansicht einer Anlage nach der Erfindung,

Fig. 2 die Darstellung des Schwebegasvorwärmers nach Fig. 1,

Fig. 3 Einzelheiten des Schwebegasvorwärmers nach Fig. 2.

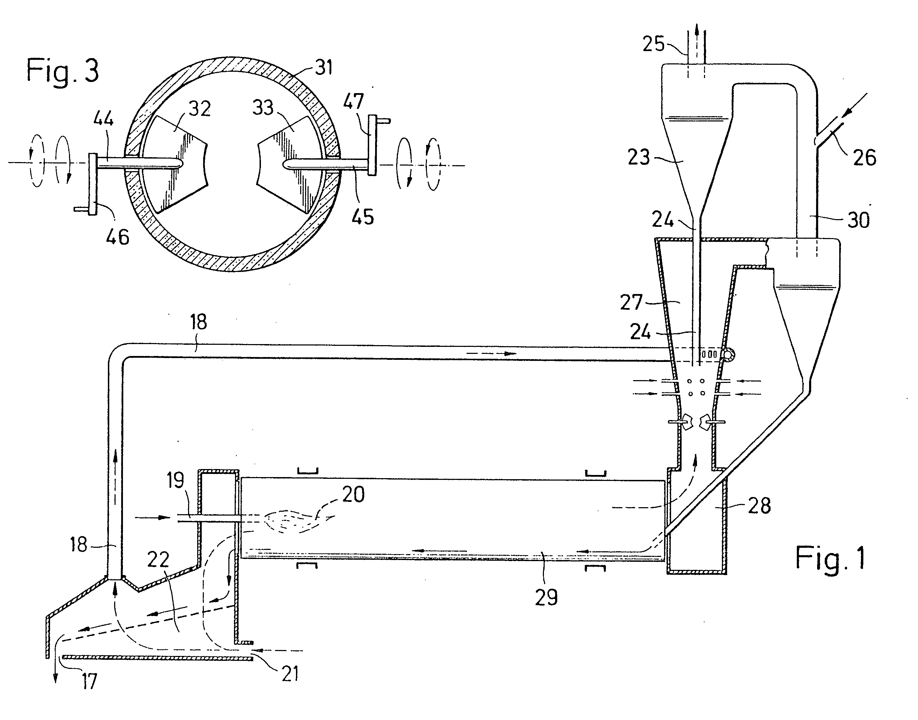

In Fig. 1 ist eine Anlage zur Herstellung von Zementklinkern schematisch dargestellt. Das Rohmehl wird hierbei über einen Eingabestutzen 26 in eine Steigleitung eingegeben, die zu einem Zyklon 23 führt, in den erhitztes Abgas eines Drehrohrofens 29 strömt.

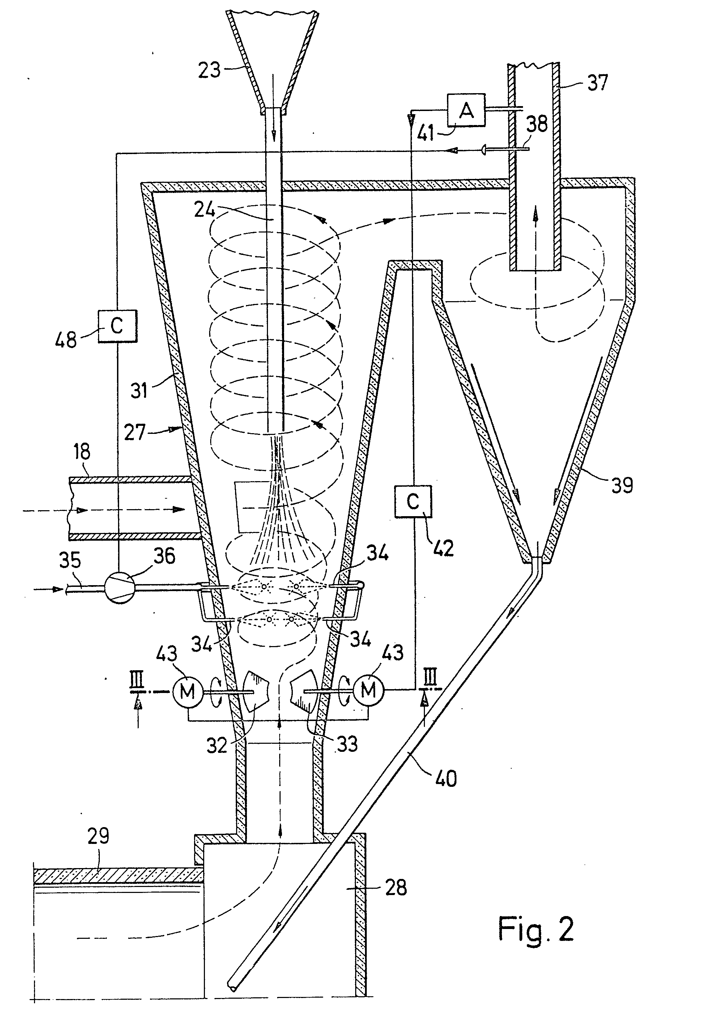

Das Abgas wird durch einen Austrittsstutzen 25 abgeleitet, während das vorerwärmte Rohmehl durch ein Rohr 24 in einen Schwebegasvorwärmer 27 geleitet wird, der im Zusammenhang mit Fig. 2 näher beschrieben wird.

Der Drehrohrofen 29 weist am Eingabeende einen Ofenkopf 28 und am Austragende einen Rostkühler 22 auf. Diesem wird über eine Zuführung 21 Luft zugeführt, die teilweise als Verbrennungsluft für eine Flamme 20, gespeist über eine Brennstoffzuleitung 19 dem Drehrohrofen 29 zugeführt wird, dabei den aus diesem austretenden Klinker kühlt und die zu einem anderen Teil über eine Leitung 18 zu dem Schwebegasvorwärmer 27 geleitet wird. Der gekühlte Klinker wird über einen Auslaß 17 ausgetragen.

Fig. 2 zeigt den Schwebegasvorwärmer 27 nach Fig. 1 im einzelnen. Er besteht aus einem leicht konisch sich erweiternden Schacht 31, der feuerfest ausgemauert ist und in den von unten über den Ofenkopf 28 zentrisch und axial die Abgase des Drehrohrofens eintreten. Im unteren Teil des Schwebegasvorwärmers 27 befinden sich verstellbare Leitschaufeln 32 und 33, die entsprechend ihrer Stellung die Menge der pro Zeiteinheit durchströmenden Ofengase bestimmen und diesen zugleich einen Drall geben. Oberhalb der Leitschaufeln 32 und 33 ist in zwei Ebenen die Brennstoffzuführung mittels Brennstoffinjektoren 34 angeordnet, die den über eine Leitung 35 zugeführten und mittels einer Pumpe 36 geförderten Brennstoff fein verteilt in den konischen Schacht 31 einführen.

In der Ebene oberhalb der Brennstoffinjektoren 34 mündet die Leitung 18, die die im Rostkühler 22 erhitzte Luft (Kühlerabluft) zuführt, in den Schwebegasvorwärmer 27, und zwar in tangential verlaufenden Öffnungen, die hier im einzelnen nicht gezeigt sind. Jedenfalls wird die erhitzte Luft so zugeleitet, daß sie den durch die Leitschaufeln 32 und 33 verursachten Drall der Ofenabgase verstärkt.

Von oben wird das aus dem Zyklon 23 kommende vorgewärmte Rohmehl durch das Rohr 24 in den Bereich der Brennstoffzuführung hineingeführt. Während Fig. 1 das Rohr 24 so zeigt, daß es in der Nähe der Mündung der Leitung 18 endet, zeigt Fig. 2 ein demgegenüber kürzeres Rohr 24. Die Möglichkeit eines kürzeren Rohres 24 besteht deshalb, weil der Drall im Schwebegasvorwärmer 27 eine Wirbelsenke entstehen läßt, die das über ein kürzeres Rohr 24 zugeführte Rohmehl im freien Fall so weit nach unten fallen läßt, daß es unbehindert bis zur Brennstoffzuführungsebene bei 34 gelangt und sich dort mit dem Brennstoff und den Ofengasen vermischt und darin gleichmäßig suspendiert. Wenn Ofengas, Brennstoff und Rohmehl sich miteinander vermischt haben, wird die über die Leitung 18 zugeführte Kühlerabluft hinzugemischt, die als Verbrennungluft dient und sofort eine flammenlose Oxidation einsetzen läßt. Die dabei frei werdende Wärme wird unmittelbar für die Entsäuerungsreaktion bei etwa 820 bis 850°C verbraucht, ohne daß die Gastemperatur höher als etwa 900°C ansteigt. Dieser flammenlose Verbrennungsvorgang findet im wesentlichen oberhalb der Zuführung der Kühlerluft über die Leitung 18 statt.

Um das System gegen Überhitzung zu schützen und den Präkalzinationsgrad möglichst konstant zu halten, wird die Brennstoffmenge aufgrund der Temperatur des Gases (Temperaturfühler 38) an einem Austrittsstutzen 37 über einen die Drehzahl der Pumpe 36 steuernden Regler 48 bestimmt.

Wie bereits angedeutet, wird das Gas, das im Schwebegasvorwärmer 27 nach oben steigt, über den Austrittsstutzen 37 abgeleitet, wogegen das entsäuerte Rohmehl in einem Zyklon 39 vom Gas getrennt wird und über eine Falleitung 40 in die Eintragzone des Drehrohrofens gelangt.

Die Leitung 18, die die Kühlerabluft dem Schwebegasvorwärmer 27 zuführt, ist von erheblicher Länge; sie ist länger als der Drehrohrofen 29. Aufgrund dieses Umstandes und des gegenüber dem Innenquerschnitt des Drehrohrofens 29 kleineren Querschnitts der Leitung 18 ist der Widerstand in der Leitung 18 größer als im Drehrohrofen 29. Das könnte unter bestimmten Bedingungen dazu führen, daß über die Leitung 18 zu wenig Verbrennungsluft angesaugt wird. Diesem Mangel wird durch eine Drosselmöglichkeit am Eintritt der Ofengase in den Schwebegasvorwärmer 27 in Form der bereits erwähnten Leitschaufeln 32 und 33 begegnet. Diese sind verstellbar, wie Fig. 3 im einzelnen zeigt, und der möglichen einen veränderbaren Strömungswiderstand, wodurch bei erhöhtem Drosselwiderstand der Unterdruck im Schwebegasvorwärmer ansteigt und dadurch mehr Kühlerabluft angesaugt wird. Die Drosselenergie wird dabei in den verfahrenstechnisch wirksamen Drall verwandelt. Auch an dieser Stelle ist ein Regelsystem vorgesehen, und zwar in der Form, daß am Austrittsstutzen 27 ein Sauerstoffmeßgerät 41 vorgesehen ist, das den Sauerstoffgehalt der Gase mißt und über ein Steuergerät 42 und über einen Stellantrieb 43 für die Leitschaufeln 32 und 33 diese verstellt.

Wie der Stellantrieb für die Leitschaufeln 32 und 33 arbeitet, ist Fig. 3 entnehmbar. Die Leitschaufeln 32 und 33 sind auf je einer Welle 44 bzw. 45 befestift, die in Bohrungen in der Wand des konischen Schachts 31 gelagert sind. Am äußeren Ende der Wellen 44 und 45 ist eine Kröpfung 46 bzw. 47 vorgesehen, die in entgegengesetzten Richtungen herausragen, so daß dann, wenn der Stellantrieb in eine bestimmte Richtung, wirkt, zwar die Wellen 44 und 45 sich gleichsinnig bewegen, aber die Leitschaufeln 32 und 33 gegenläufig gedreht werden, so daß das durchströmende Gas in eine Drallbewegung versetzt wird. Die Fig. 3 zeigt diejenige Stellung der Leitschaufeln 32 und 33, in der dem durchströmenden Gas der größte Widerstand entgegengebracht wird. In der anderen, um 90° geschwenkten Stellung der Leitschaufeln 32 und 33 ist der Widerstand am kleinsten.

**Patentansprüche**

1. Verfahren zum Vorbrennen von karbonatischen Rohstoffen, wie z.B. Zementrohmehl, in einem Schwebegasvorwärmer, bei dem Brennstoff in Rauchgase aus einem nachgeschalteten Drehrohrofen eingeführt wird und anschließend aus dem Kühler abgezogene Kühlluft als Verbrennungsluft·tangential eingeführt wird, dadurch gekennzeichnet, daß das Rohmehl in den Bereich der Brennstoffzuführung hineingeführt wird und den von unten eingeführten Rauchgasen vor der Brennstoffzuführung durch Aufprägen eines Dralls ein veränderbarer Strömungswiderstand entgegengesetzt wird.

2. Vorrichtung zur Durchführung des Verfahrens nach Anspruch 1, gekennzeichnet durch einen sich nach oben hin konisch erweiternden Schacht (31) mit einem axialen Einlaß im unteren Bereich für die Rauchgase, wobei der Einlaß mit drehbaren Leitschaufeln (32, 33) versehen ist.

3. Vorrichtung nach Anspruch 2, dadurch gekennzeichnet, daß am Austrittsstutzen (37) ein Sauerstoffmeßgerät (41) vorgesehen ist, das den Sauerstoffgehalt der Rauchgase nach dem Durchströmen des Schwebegasvorwärmers (27) mißt und über ein Steuergerät (42) und über einen Stellantrieb (43) für die Leitschaufeln (32, 33) diese verstellt.

**Claims**

1. A process for pre-firing carbonate-containing raw materials such as raw cement powder, in a gas suspension pre-heater, wherein fuel is run into waste gases from a downstream rotary kiln and then cooling air, taken from the cooler, is run in tangentially as combustion air, characterized in that the raw powder is run in near or at the point at which fuel is let in and by producing a spinning motion a variable resistance to flow of the waste gases, coming from a lower part, is produced.

2. A plant for undertaking the process of claim 1, characterized by a coned shaft (31) becoming broader upwards and having an axial inlet in its lower part for the flue-gases, said inlet having turning guide blades (32, 33).

3. A plant as claimed in claim 2, characterized in that on the outlet pipe connection (37) there is an oxygen measuring instrument (41) for the oxygen level in the waste gases having made their way through the gas suspension pre-heater (27) and for causing adjustment of the guide blades (32, 33) by way of a controller (42) and a servo-system (43).

**Revendications**

1. Procédé de cuisson de matières premières carbonatées, comme de la poudre brute pour la production du ciment, selon lequel du combustible est introduit dans les gaz de fumée provenant d'un four rotatif disposé en aval et de l'air froid, extrait du refroidisseur, est ensuite introduit tangentiellement comme air comburant, procédé caractérisé en ce qu'on introduit la poudre brute dans la zone d'arrivée du combustible et, en leur imprimant un mouvement giratoire en amont de l'arrivée du combustible, on oppose un résistance variable à l'écoulement des gaz de fumée introduits par le bas.

2. Installation pour la mise en œuvre du procédé selon la revendication 1, caractérisé en ce qu'elle comporte un four vertical (31) de forme conique s'évasant vers le haut et comportant à sa partie inférieure une entrée axiale des gaz de fumée, cette entrée étant équipée de pales directrices (32, 33) pouvant être tournées.

3. Installation selon la revendication 2, caractérisée en ce qu'elle comporte, à un conduit de sortie (37), un dispositif (41) qui mesure la teneur en oxygène des gaz de fumée après leur traversée du préchauffeur (27) de gaz de fluidisation et d'entraînement et qui, par l'intermédiaire d'un dispositif de commande (42) et d'un dispositif d'ajustement et de déplacement (43) des pales directrices (32, 33), ajuste la position de celles-ci.

Fig. 1

Fig. 3

Fig. 2